# EUROPEAN PATENT APPLICATION

(11) **EP 0 715 815 A1**
(43) Date of publication of application: **12.06.1996**
(21) Application number: 95203022.9
(22) Date of filing: 07.11.1995
(51) Int. Cl.: A23N 12/02

(54) **Apparatus and method for washing potatoes and like tuberous plants**

(30) Priority: 08.11.1994 NL 9401863
(71) Applicant: Konstruktie- en Machinebouw van Dijke Zeeland B.V., NL-4675 PZ St. Philipsland (NL)
(72) Inventor: van Dijke, D., NL-4675 AZ St. Philipsland (NL)
(74) Representative: Smulders, Theodorus A.H.J., Ir.

(57) **Abstract**

The invention relates to a washing apparatus (1) for potatoes and like bulbous and tuberous plants, comprising a flushing zone (2) and a receiving zone (3) located downstream thereof, driving means (11) being provided for keeping a mass of water in the flushing zone (2) in an upwards whirling motion (12), and means being provided for discharging washed bulbs or tubers, a washing zone (6) being included which connects to the flushing zone (2), the apparatus comprising separating means for separating solid particles in the washing zone (6) at least through settling. The invention further relates to a method for washing potatoes and like bulbous and tuberous plants, in particular by means of an apparatus according to the invention.

## Description

The invention relates to a washing apparatus for potatoes and like bulbous and tuberous plants, comprising a flushing zone and a receiving zone located downstream thereof, driving means being provided for keeping a mass of water in the flushing zone in an upwards whirling motion, and means being provided for discharging washed bulbs or tubers. Such an apparatus is known from Dutch laid-open patent application No. 88 01353.

To simplify the specification, only potatoes will be mentioned as bulbous and tuberous plants.

In the known apparatus, the flushing zone and the receiving zone are at the bottom side interconnected by a U-shaped tube. Provided in the tube is a blade wheel with which water from the receiving zone can be forced into the flushing zone, causing the mass of water in the flushing zone to be kept in an upwards whirling motion. At the top side of the apparatus, water can flow from the flushing zone into the receiving zone.

During operation, the potatoes with clinging soil are dumped from the top side into the flushing zone, wherein they are held in suspension by the upwards whirling mass of water and the clinging soil is largely removed therefrom. The flushed potatoes are carried into the receiving zone with the flowing water. The potatoes are discharged from the receiving zone, while the water with the sand and other impurities included therein is forced back through the tube into the flushing vessel.

In the known apparatus, the impurities washed from the potatoes by the water are circulated with the water, while the input of potatoes constantly causes soil to be fed into the apparatus. Consequently, the water circulated in the apparatus acquires a higher and higher density of solid particles. This has an adverse effect on the action of the apparatus, in particular on the flushing action thereof.

Further, in many cases, the cleaning action of the washing apparatus is too low, in particular during the processing of potatoes fouled with persistent particles.

With the known apparatus, the problem of the increasing density of solid particles can be reduced by continuously or periodically refreshing the water in the apparatus. However, this has the drawback that it requires much water and that the discharged water is polluted with large amounts of sand, other solid particles and for instance chemicals, which cannot always be discharged and drained away without any trouble, so that the environmental impact of using the known apparatus in that manner may prove to be unacceptably great.

The object of the invention is to provide a washing apparatus of the type described in the preamble of the main claim, wherein the above-mentioned drawbacks are avoided. To that end, the washing apparatus according to the invention is characterized by the features of claim 1.

By includng a washing zone between the flushing zone and the receiving zone, the cleaning action of the apparatus is enhanced because the potatoes are longer and more intensively in contact with the whirling, washing water. The heavy, strongly adherent particles such as clay particles, washed from the potatoes by the washing water, will deposit in the washing zone, the heaviest particles closest to the flushing zone. By means of the separating means, these particles can be separated in the washing zone, as a result of which relatively clean potatoes and relatively clean water are passed from the washing zone to the receiving zone. As the water is cleaned relatively effectively in the washing zone, the water used for the cleaning is prevented from containing more and more solid particles. Consequently, the water needs to be renewed only very rarely, if at all.

In further elaboration, the washing apparatus is characterized by the features of claim 2.

During operation, the drum rotating inside the washing vessel constantly keeps the water in the washing zone in motion. Thus, the duration and the intensity of the contact between the water and the potatoes is enhanced in a simple manner. The drum being at least partly perforated, solid particles may get between the drum and the washing vessel. From there, these settled particles can readily be discharged by means of at least the conveying means, without potatoes being taken along as well. By the flow of water and moving means optionally included within the drum, the potatoes are passed in the direction of the receiving zone.

In an advantageous embodiment, a washing apparatus according to the invention is characterized by the features of claims 4 and 5.

The conveyor screws continuously rotate along with the drum. Solid particles which settle between the threads of the conveyor screws, through the wall of the drum, are passed along the bottom of the washing vessel in the direction of the outlet accommodated between the ends, leading in conveying direction, of the conveyor screws. In this manner, a discharge of the settled particles is automatically provided through means which are simple in respect of construction and use.

In an alternative embodiment, a washing apparatus is characterized by the features of claim 7.

In this embodiment, the settled solid particles are discharged from the washing zone from aside. The solid particles are moved along a wall of the washing vessel to reach an outlet along which they can be discharged. The advantage of this embodiment is that in this manner, relatively large parts can also be readily discharged without the outlet becoming clogged. Moreover, in this embodiment, the outlet may be located above the water level, since the settled solid particles can be moved upwards along a wall of the washing vessel by the conveying means.

In a second alternative embodiment, a washing apparatus according to the invention is characterized by the features of claim 9.

The conveyor screw or screws, accommodated in one or more recesses of the wall of the washing vessel, provide a proper discharge of the settled particles and moreover provide a blending thereof during conveyance, creating a homogenous mass. Further, this embodiment has the advantage that the rotational speed of the conveyor screw can be controlled independently of the rotational speed of the drum, so that the discharge speed can be adapted in a simple manner to the settling speed of the particles.

In a preferred embodiment, a washing apparatus according to the invention is characterized by the features of claim 10.

During the cleaning of potatoes, light, almost suspending particles can be carried along by the flushing and washing water through the flushing and washing zones without these particles settling therein to a sufficient extent. Hence, these particles end up in the receiving zone, together with the washing water. Because in this embodiment of the washing apparatus according to the invention, the receiving zone comprises second separating means for separating settled solid particles, these light particles, too, can be removed from the water before it is reused. Consequently, almost completely cleaned water is fed to the flushing zone, permitting the water in the washing apparatus to be used for a very long time without the cleaning action becoming lost.

This further elaboration of the invention is based on the insight that with an apparatus of the type described, the water, from which the heavier solid particles are largely removed in the washing zone, comes to rest in the receiving zone so that the remaining solid particles therein are given the opportunity to settle. Thus, the water in the washing apparatus can in a simple and efficient manner be kept in a condition suitable for the washing process and be fed back to the flushing zone or discharged to open water. The separated solid particles can be dumped back on the field. The potatoes discharged from the apparatus are properly cleaned.

In this embodiment of a washing apparatus according to the invention, the separating means preferably comprise a settling vessel, disposed in a receiving vessel which defines the receiving zone and having a lower portion which tapers off towards the bottom, comprising means for periodically extracting settled solid particles therefrom.

During operation of the apparatus, the solid particles in the washing vessel and/or the settling tank form a slurry which becomes increasingly dense. When the density becomes very high, an almost dewatered substance is formed at the bottom of the washing vessel and/or the settling tank, which substance can be extracted as a thick slurry. Hence, this apparatus enables washing with very little loss of water.

Further embodiments of a washing apparatus according to the invention are given in the subclaims.

In a particularly advantageous embodiment, a washing apparatus according to the invention is characterized by the features of claim 20.

As the apparatus is of modular construction, it can be rendered suitable in different manners for different products and impurities. In the first construction, wherein the flushing zone directly connects to the receiving zone, the washing apparatus is suitable for cleaning products which are fouled relatively little and whose fouling comes off and settles in a simple manner. In the second construction, wherein the flushing zone connects to the washing zone, which at the opposite side connects to the receiving zone, products can be cleaned which are more difficult to clean and/or whose fouling settles less easily.

The invention further relates to a method for washing potatoes and like bulbous and tuberous plants, in particular suitable for use with an apparatus according to the invention, wherein the potatoes are flushed in a whirling mass of water in a flushing zone, whereupon the flushed potatoes are discharged from the flushing zone in the direction of a receiving zone.

A method according to the invention is characterized by the features of claim 21.

This method enables potatoes and like tuberous and bulbous plants to be washed almost without any loss of water and with a constant result, while a relatively compact apparatus can be employed and the soil clinging to the potatoes can readily be discharged, if necessary after cleaning, and further processed.

To explain the invention, exemplary embodiments of a washing apparatus will hereinafter be described with reference to the accompanying drawings, wherein:
Fig. 1 shows a washing apparatus according to the invention in side elevation, in partial section:
Fig. 2 shows the washing apparatus according to Fig. 1 in a sectional view taken on the line II-II;
Fig. 3 shows an alternative embodiment of a washing apparatus according to the invention in side elevation, in partial section;
Fig. 4 shows the washing apparatus according to Fig. 3 in a sectional view taken on the line IV-IV;
Figs. 5a and 5b show in cross-sectional view two alternative embodiments of the washing apparatus;
Fig. 6 shows a cell wheel in cross section; and
Fig. 7 shows a further alternative embodiment of the apparatus, combined with a tractor vehicle and a lifter.

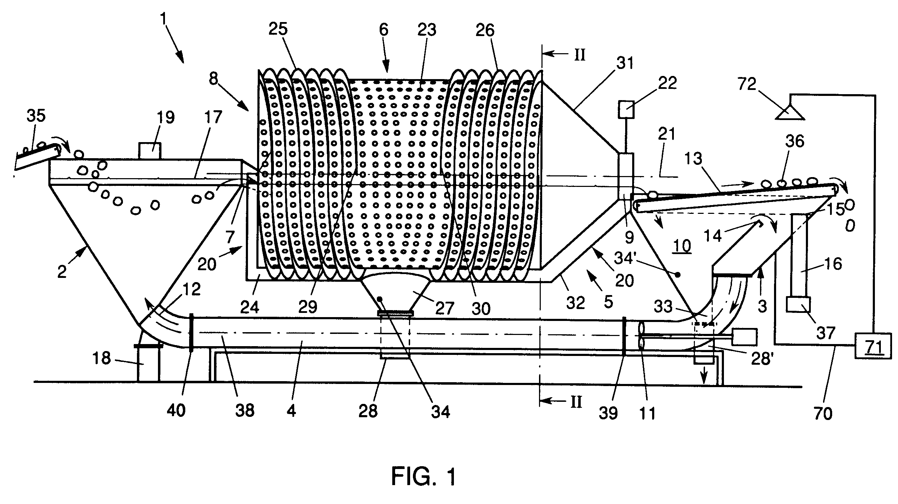

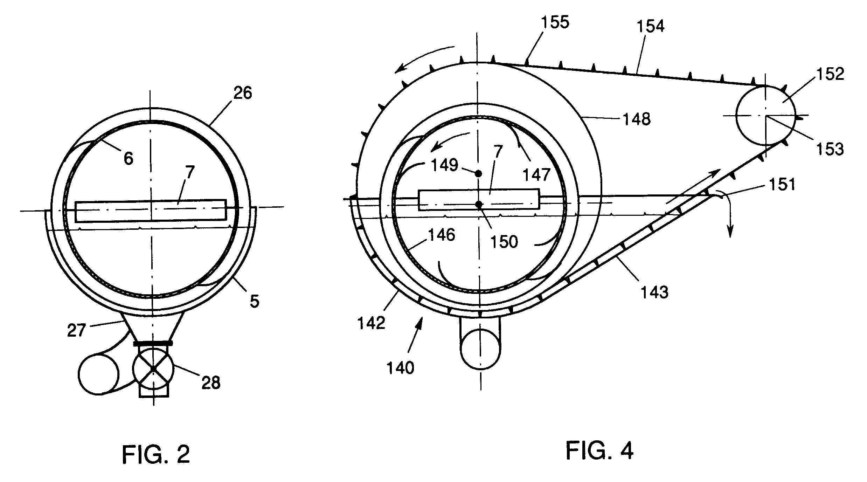

Figs. 1 and 2 show a first embodiment of the washing apparatus 1 in two different views. This embodiment of the washing apparatus is in particular suitable for use for washing potatoes lifted from a field wherein many stones and clods and like relatively heavy objects are embedded, such as for instance a field of clay soil.

The washing apparatus 1 comprises a flushing vessel 2, trough-shaped in the exemplary embodiment shown, and a likewise troughed receiving vessel 3, which vessels are connected by a return line 4 at their respective bottom sides. Accommodated between the flushing vessel 2 and the receiving vessel 3 is a washing vessel 5, wherein a rotatable washing drum 6 is disposed. The flushing vessel 2 is at its top side provided with a first overflow 7, opening into the washing vessel 5 adjacent the first open end 8 of the washing drum. At its side facing away from the flushing vessel 2, the washing vessel 5 is provided with a second overflow 9, opening above a settling vessel 10 which is arranged in the receiving vessel 3 and extends at least throughout the width of the second overflow 9. In the return line 4, a driven screw 11 is disposed whereby a mass of water can be pumped from the receiving vessel 3 into the flushing vessel 2. By the screw 11, the mass of water is forced into the flushing vessel 2 in such a manner that an upwards whirling flow 12 is started therein.

Provided at the top of the receiving vessel 3 is a conveyor belt 13 inclining from under the second overflow 9 and having the form of a bar belt or a belt having a surface which is otherwise passable by water, which conveyor belt ends outside the edge of the receiving vessel.

The upper longitudinal edges 14 of the settling vessel 10 are located at some distance below the bottom side of the second overflow 9, so that water falling over the edge first passes the conveyor belt 13 and only then reaches the water level in the receiving vessel 3. The water level 15 in the receiving vessel 3 is controlled by means of an overfall 16 whose upper opening is lower than the bottom edge of the second overflow 9, but higher than the longitudinal edges 14 of the settling tank 10. During operation of the apparatus 1, the water level 15 is always lower than the water level 17 in the flushing vessel 2.

Provided at the bottom of the flushing vessel 2 is a stone-receiving vessel 18, wherein stones and like heavy objects which together with the potatoes end up in the flushing vessel are received through settling, and a stone-discharge belt 19 is provided for removing the stones from the stone-receiving vessel 18.

The washing vessel 5 has an approximately semicircular cross section and two substantially closed ends 20. The washing drum 6 has a circular cross section and is tubular. The axis of rotation 21 of the washing drum 6 extends substantially horizontally between the two ends 20 of the washing vessel 5 and is located centrally therein. The washing drum 6 can be rotated within the washing vessel 5 about the axis of rotation 6 by driving means 22 schematically shown in the drawing, for instance a rope, belt, band or gear drive, a directly engaging drive or a drive by the flowing water.

The washing drum 6 has an at least partly perforated wall 23 through which solid particles can be received in a space 24 between the washing vessel 5 and the wall 23 of the washing drum 6. On the outside, the washing drum 6 comprises a first flange 25 and a second flange 26, which flanges extend spirally around the drum 6 and are wound in opposite directions. The height of the flanges is approximately equal to the distance between the wall 23 of the drum 6 and the washing vessel 5.

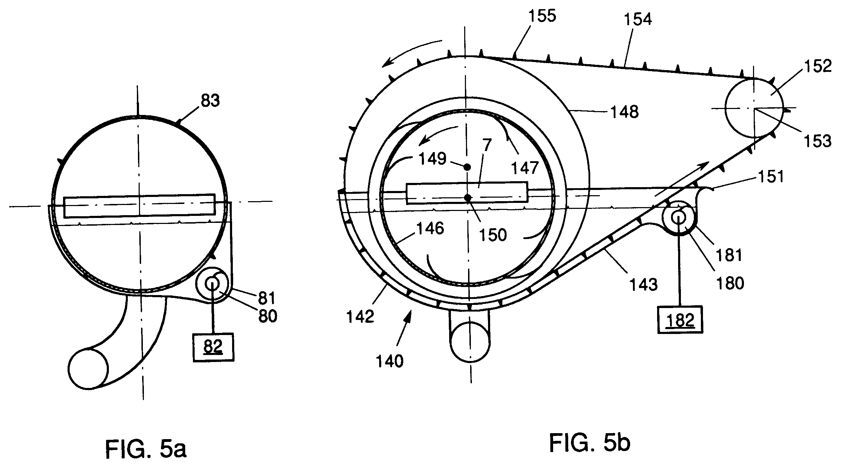

Near the center of the washing vessel 5, in the bottom thereof, an outlet 27 is provided to which a sand separator connects, in the form of a cell wheel 28, which is shown in more detail in Fig. 5. The two flanges 25, 26 constitute conveyor screws, whose ends 29, 30, leading during conveyance, are located adjacent the outlet 27. Accordingly, during use, the conveying directions of the two conveyor screws 25, 26 are opposite and in the direction of the outlet 27.

At the side of the receiving vessel 3, the washing vessel 5 and the washing drum 6 have corresponding neck parts 31, 32. The neck part 31 of the washing drum 6 tapers off in the direction of the second overflow 9, as a result of which the passage becomes smaller and the water therein is accelerated during use. This yields a positive flow. Moreover, the neck 31 partly prevents sand and like solid particles from remaining sitting adjacent the end of the washing vessel.

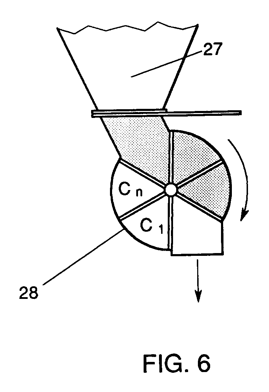

The settling vessel 10 is of a troughed construction, with the bottom side 33 being staggered relative to the return line 4. Also connected to the bottom side 33 of the settling vessel 10 is a sand separator in the form of a cell wheel 28', shown in more detail in Fig. 6.

The cell wheel 28, 28' can be rotated periodically or continuously, the rotation being controlled by a measuring device 34, 34' with which the density of the slurry in the washing vessel 5 and the settling vessel 10 respectively is measured. If the measured density exceeds a given limit value, the cell wheel 28, 28' will (in the case of periodical discharge) be rotated one or more cells C₁-Cₙ, whereby, in each case, a part of the settled solid particles is received in an empty cell Cₙ, causing the density of the slurry in the washing vessel 5 or the settling vessel 10 respectively to decrease. In the case of continuous discharge, the speed of rotation of the cell wheel 28, 28' is controlled on the basis of the measured density of the slurry.

With this first embodiment of the apparatus according to the invention, for instance potatoes can be washed in the following manner.

By a conveyor belt, a bucket elevator or a like means 35, potatoes 36 with dirt (sand, clay, stones and the like) which may or may not cling thereto are fed into the flushing vessel 2. By the upwards whirling flow 12, the potatoes are held in suspension, while at least a part of the earth or clay is rinsed off the potatoes. At the same time, stones and like heavy objects fall down against the whirling flow 12 and are received in the stone-receiving vessel 18 and are from there discharged outside the washing apparatus 1 by the stone-discharging belt 19.

With the water wherein the sand and/or clay is suspended, the potatoes, partly washed clean, are dumped via the first overflow 7 into the drum 6 rotating within the washing vessel 5. By the washing drum 6, a washing movement is generated whereby the potatoes are further cleaned. Via the perforated wall 23, sand and clay and like solid particles, flushed along from the receiving vessel or loosened in the washing drum 6, are introduced into the interspace 24 within the reach of the conveyor screws 25, 26. The heavier loose particles will settle sooner than the lighter particles. The conveyor screws 25, 26 slide the particles, settled between the drum 6 and the washing vessel 5, along the bottom of the washing vessel 5 in the direction of the outlet 27, through which the particles are received in the cell wheel 28 and discharged as described hereinabove.

The washing drum 6 has substantially a relatively large section, as a result of which the flow rate in the direction of the receiving vessel 3 is relatively low and a good washing time can be realized. Moreover, this will give the solid particles sufficient opportunity to leave the drum 6 through the perforation openings.

A part of the solid particles, and in particular the very light particles, remain suspending in the water in the drum 6. Via the second overflow 9, these particles are dumped together with the potatoes and the water into the receiving vessel 3, and the potatoes 36 end up clean on the conveyor belt 13 and are discharged from the washing apparatus 1, while the fouled water is received in the settling vessel 10.

On account of the balance existing between the amount of water discharged via the return line 4 and the amount of water fed to the receiving vessel 3 via the second overflow 9, a substantially slow-flowing mass of water is brought about, allowing the solid particles which are still suspended in the settling vessel 10 to settle at least substantially. In the meantime, a part of the water flows as clean water from the settling vessel 10 over the longitudinal edge 14 located at the side of the settling vessel 10 remote from the second overflow 9, which water is reintroduced into the flushing vessel 2 by the screw 11.

In the settling vessel 10, the solid particles received therein form a slurry which becomes thicker and thicker, and, accordingly, the sediment layer formed at the bottom will contain less and less water. Periodically, the cell wheel 28' is further rotated by one cell Cₙ, permitting a part of the sediment layer to be discharged outside the washing apparatus.

Adjacent the beginning of the return line 4, a flushing line 70 is connected to the receiving vessel 3, in which flushing line 70 a microfilter 71 is provided. With the microfilter, very small particles, for instance of from 0.5-0.8 µm, can be filtered from the water. Via a sprinkler head 72, the thus filtered water is then sprayed over the potatoes located on the discharge belt 13 and brought into the receiving vessel 3 again. Accordingly, the potatoes and the water are cleaned even further.

Owing to the feed of the potatoes 36 and the discharge of the solid particles, the water level 17 in the flushing vessel 2 and the water level 15 in the receiving vessel 3 are subject to fluctuations. In order to guarantee a substantially constant water level in the vessels all the same, the receiving vessel 3 comprises the overfall 16. The water running out through the overfall is received in a storage vessel 37, from where, by means of for instance a piston or a pump, it can be fed back into the receiving vessel 3, when the water level 15 therein drops below a minimum. This overfall 16 prevents the necessity of supplying extra water from outside the washing apparatus 1 after for instance a large number of potatoes has been processed, or the loss of water from the washing apparatus 1 when such a large amount of potatoes is being fed.

When potatoes are lifted from a field which mainly consists of loose soil, such as for instance sandy soil, it can be expected that few stones and clods and like objects will be introduced into the apparatus together with the potatoes. Moreover, the potatoes lifted will be fouled only slightly, with relatively loose dirt. In these cases, the washing zone is not necessary, in principle. Hence, it can be left out. For this reason, the apparatus shown in the drawing is of a modular construction. In the return line 4, a removable part 38 is included, between a first connecting flange 39 at the receiving vessel 3 and a second connecting flange 40 at the flushing vessel 2. For that purpose, the removable part 38 has corresponding flanges. The washing vessel 5 and the washing drum 6 can be removed together, whereupon the receiving vessel 3 can be connected to the flushing vessel 2. The first connecting flange 39 is coupled to the second connecting flange 40, and the first overflow 7 opens above the settling vessel 10. The use of this shortened apparatus substantially corresponds to that of the version as shown in Figs. 1 and 2.

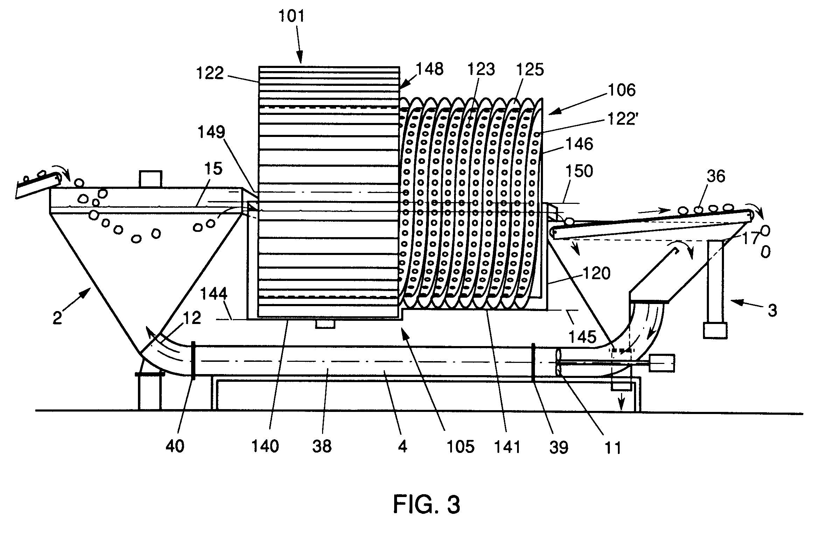

Figs. 3 and 4 show an alternative embodiment of a washing apparatus 101 according to the invention. The flushing vessel 2, the receiving vessel 3 and the return line 4, with the associated parts, are comparable with the embodiment shown hereinabove. The washing vessel 105 and washing drum 106 and the discharge means for the solid particles settled in the washing vessel are of a different construction. The washing vessel 105 consists of two vessel parts 140, 141 which, viewed in longitudinal direction, interconnect. The second vessel part 141 located adjacent the receiving vessel 3 has a semicircular cross section and a closed, flat end partition 120. The first vessel part 140 located adjacent the flushing vessel 2 has a cross section as shown in particular in Fig. 4, comprising an approximately quarter circle segment 142 (left-hand bottom) and an inclined wall part 143 connected thereto at the bottom side, which wall part extends upwards to the right in the drawing. The radius of the circle segment 142 is greater than the radius of the second vessel part 141, the (fictive) central axes of the two vessel parts 140, 141 are in line. Accordingly, the bottom line 144 of the first vessel part 140 is lower than the bottom line 145 of the second vessel part.

The washing drum 106 comprises a tubular inner drum 146 having a perforated outer wall 123. The inner drum 146 extends throughout the length of the washing vessel 105 and has for instance a constant diameter. The part of the inner drum 146 which extends in the second vessel part 141 has its outer side provided with a flange 125 wound helically around the drum, which flange constitutes a conveyor screw and at least approximately abuts against the wall of the second vessel part 141. During normal use, the conveyor screw has a conveying direction in the direction of the partly lower positioned first vessel part 140. The inner drum 146 is further at least partly provided with inner auger means 147. Provided in the first vessel part 140, around the inner drum 146, is an outer drum 148 whose length approximately corresponds to the length of the first vessel part 140. The outer drum 148 has a greater diameter than the inner drum, and the axis of rotation 149 of the outer drum 148 is preferably higher than the axis of rotation 150 of the inner drum 146. Accordingly, in this embodiment, the outer drum rotates eccentrically relative to the inner drum. However, the inner drum 146 and the outer drum 148 may also have the same axis of rotation 150.

Arranged slightly above the upper free longitudinal edge 151 of the inclined sidewall 143 and outside the washing vessel 105 is a reversing roller 152 whose axis of rotation 153 is parallel to the axes of rotation of the drums 146, 148. Provided around the outside of the outer drum 148 and the reversing roller 152 is a discharge belt 154 whose width approximately corresponds to the length of the first vessel part 140. On the side facing the washing vessel 105, the discharge belt 154 comprises upright lips 155, which at least approximately abut against the inner side of the first vessel part 140. Between the lips 155, the discharge belt 154 and the outer drum 148 are of passable design, for instance in the form of bars, netting or perforations. The washing apparatus comprises driving means 122, 122', indicated schematically, for the outer drum and the conveyor belt and the inner drum respectively.

During use, solid particles in the washing vessel 105 settle both in the first vessel part 140 and in the second vessel part 141. By means of the conveyor screw 125 and the auger means 147, the solid particles are passed towards the low part of the first vessel part 140, between the lips 155. The conveyor belt 154 is driven by driving means (not shown) in such a manner that the settled solid particles are moved upwards along the inclined sidewall 143 to above the water surface in the washing vessel. By the lips 155, the solid particles are forced over the free longitudinal edge 151, while the water substantially flows back along the lips 155.

Under the free longitudinal edge 151 a receiving apparatus can be disposed to collect the solid particles, but it is also possible to dump the solid particles directly back on a field or the like.

By setting the drive speeds of the inner drum 146 and the outer drum 148, the measure of thickening of the slurry between the lips 155 of the discharge belt 154 can be controlled so that the slurry discharged contains as little water as possible, while an optimum washing is obtained. In this embodiment, too, water can be sprayed over the discharge belt via a microfilter and sprinkler head.

Figs. 5a and 5b show two alternative exemplary embodiments of an apparatus according to the invention.

Fig. 5a shows in cross section a washing vessel 5 containing a rotatable washing drum 6. The washing drum 6 has a perforated wall having an almost smooth outer side slightly spaced from the wall of the washing vessel 5. Adjacent the bottom side, at the side which, viewed in rotating direction, is located at the rear, and next to the center, the washing vessel 5 is provided with a recess 81 extending in the longitudinal direction of the washing vessel and connecting to, for instance, a cell wheel 28, 28' or a like discharge means. In the recess, a conveyor screw 80 is fittingly accommodated. This conveyor screw is adapted to convey particles settled in the washing vessel in the direction of the discharge means 28, 28'. The conveyor screw 80 is rotatable independently of the washing drum 6 by means of a drive mechanism 82. The washing drum 6 has its outer side provided with a series of scrapers 83 which carry the settled particles in the direction of the recess 81 and deliver them therein. Because the conveyor screw 80 can be driven independently of the washing drum 6, the discharge rate of the solid particles can precisely be adjusted to the settling rate in the washing drum.

Fig. 5b shows in section an apparatus as shown in Fig. 4, wherein the washing vessel is adjacent the upper longitudinal edge 151 provided with a recess 181 containing a conveyor screw 180. The conveyor screw 180 extends in the longitudinal direction along the washing vessel 105 and is drivable by means of driving means 182, independently of the inner drum and the outer drum.

The conveyor belt 154 ensures that particles settled in the washing vessel are conveyed to the recess, from which the particles are then discharged via the conveyor screw 180 and optional separating means such as a cell wheel. Owing to the recess 181, water from the apparatus is prevented from being passed over the longitudinal edge 151, while the settled particles are nevertheless discharged properly. In this embodiment, the conveyor screw 180 is preferably partly above the water level in the washing vessel.

As a matter of fact, the washing vessel 5, 105 can also be provided with a number of recesses and conveyor screws.

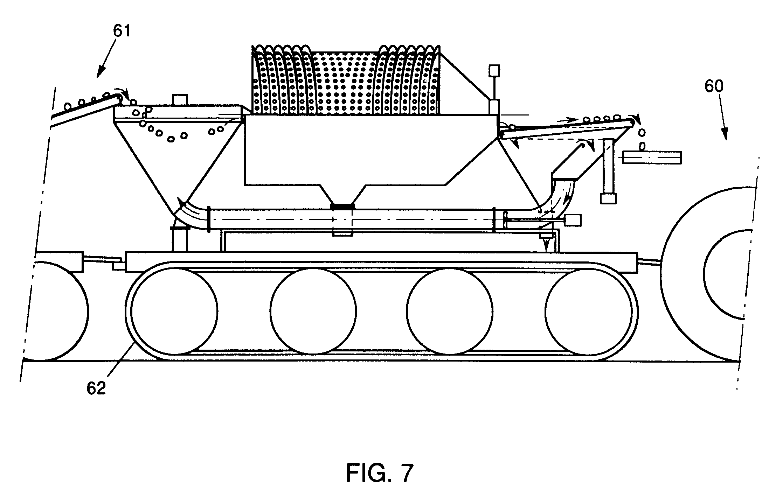

In the further alternative embodiment of the washing apparatus 1, 101 according to the invention, as shown in Fig. 7, the washing apparatus is of mobile design, enabling the washing apparatus, coupled to a tractor vehicle 60 and a lifter 61, to be directly used on a field. As the washing apparatus 1, 101 functions with a constant amount of water present in the washing apparatus 1, 101, it can be used on a field in a simple manner, whereas the known apparatuses are always dependent on an external water supply, such as for instance a water supply system or a ditch. The direct use of the washing apparatus 1, 101 on a field has the advantage that the solid particles can directly be dumped back on the field, causing no problems concerning the storage and further processing thereof.

Preferably, the washing apparatus comprises track chains 62 or like means distributing the pressure of the apparatus over the ground. As a result, the lifting and cleaning of potatoes remains possible even on particularly unstable, for instance boggy or very soft fields, which avoids damage caused by, for instance, lifting losses or having to lift manually.

The invention is by no means limited to the embodiments described. For instance, instead of a cell wheel, a slide can be used, or the solid particles can be received in the settling vessel for a longer period without being discharged therefrom. The washing drum can have its inside provided with turbulence-generating means and for instance be divided into sections which may be rotatable dependently or independently of one another, for instance at different speeds or in opposite directions, whereby the washing action can even be further enhanced. Further, different conveying means may be included between the drum and the washing vessel, such as for instance one or more separately driven augers, pushers or like conveyors. Further, the potatoes can be fed to the flushing vessel from a bulk hopper, and the potatoes may for instance be passed through the top part of the flushing vessel by a second conveyor belt, whilst the water fed back from the receiving vessel is fed to the flushing vessel from above via sprinklers. In this connection, the settling vessel 10 and the receiving vessel 3 can for instance be arranged side by side as two substantially uniform vessels.

## Claims

1. A washing apparatus for potatoes and like bulbous and tuberous plants, comprising a flushing zone and a receiving zone located downstream thereof, driving means being provided for keeping a mass of water in the flushing zone in an upwards whirling motion, and means being provided for discharging washed bulbs or tubers, characterized in that a washing zone is included which on the one side connects to the flushing zone and on the other side to the receiving zone, the apparatus comprising separating means for separating solid particles in the washing zone at least through settling.

2. A washing apparatus according to claim 1, characterized in that the washing zone is defined by a washing vessel having disposed therein a washing drum rotatable about an axis of rotation extending substantially horizontally between the flushing zone and the receiving zone, the washing drum comprising an at least partly perforated outer wall and having an open end face on both sides, conveying means being included between the washing drum and the washing vessel for moving solid particles settled in the washing zone in the direction of an outlet.

3. A washing apparatus according to claim 2, characterized in that the conveying means comprise at least one conveyor screw arranged adjacent the outer side of the washing drum.

4. A washing apparatus according to claim 3, characterized in that the outlet is arranged in the bottom adjacent a central part of the washing vessel, a conveyor screw being provided on both sides of the outlet and adjacent the outer side of the washing drum, the conveyor screws having opposite conveying directions.

5. A washing apparatus according to claim 3 or 4, characterized in that the or each conveyor screw is fixedly connected to the washing drum so as to rotate simultaneously with the washing drum during use.

6. A washing apparatus according to any one of claims 3-5, characterized in that the outlet comprises first discharge means for discharging, preferably periodically, solid particles settled in the washing zone.

7. A washing apparatus according to claim 2, characterized in that the conveying means are adapted to discharge the solid particles, settled in the washing zone during use, from the bottom of the washing vessel approximately transversely to the axis of rotation of the washing drum along a longitudinal wall of the washing vessel and over a longitudinal edge thereof.

8. A washing apparatus according to claim 7, characterized in that the conveying means comprise a conveyor belt extending around the washing drum and having carrying means such as trays or transverse partitions, said conveyor belt extending between the washing drum and the washing vessel, the carrying means extending substantially in the direction away from the washing drum so that, during use, solid particles are carried along from the wall and/or bottom of the washing vessel by the carrying means.

9. A washing apparatus according to any one of claims 2-8, characterized in that the washing vessel is provided with a recess extending in the longitudinal direction and accommodating a conveyor screw adapted to discharge settled particles outside the washing zone.

10. A washing apparatus according to any one of claims 1-9, characterized in that the receiving zone comprises second separating means for separating, at least through settling, solid particles in the receiving zone.

11. A washing apparatus according to claim 10, wherein the flushing zone is defined by a flushing vessel, and the receiving zone is defined by a receiving vessel, the washing apparatus comprising water level-control means, characterized in that the second separating means comprise a settling vessel extending widthwise in the receiving vessel, and the water level-control means being adapted to keep the water level at or above an upper longitudinal edge of the settling vessel.

12. A washing apparatus according to claim 11, characterized in that the water level-control means comprise an overfall.

13. A washing apparatus according to claim 12, characterized in that the overfall connects to a storage tank, means being provided for passing flushing water from the storage tank to the receiving vessel or the flushing vessel.

14. A washing apparatus according to any one of claims 11-13, characterized in that the water level-control means are adapted to control the water level in the receiving vessel to be lower than the overflow and slightly higher than the upper longitudinal edge of the settling vessel.

15. A washing apparatus according to any one of claims 11-14, characterized in that provided at the bottom side of the settling vessel are second discharge means for extracting therefrom, preferably periodically, settled solid particles.

16. A washing apparatus according to any one of claims 6-15, characterized in that the discharge means comprise a cell wheel.

17. A washing apparatus according to any one of claims 6-16, characterized in that control means are provided for operating the discharge means on the basis of the density of

18. A washing apparatus according to any one of the solid particles in the receiving zone or the washing zone.preceding claims, characterized in that the washing apparatus is mobile.

19. A washing apparatus according to claim 18, characterized in that the washing apparatus can at least be coupled to a tractor vehicle and a lifter.

20. A washing apparatus according to any one of the preceding claims, chararacterized in that the apparatus is of modular construction, wherein at least in a first assembly the flushing zone directly connects to the receiving zone, and in a second assembly the flushing zone connects to the washing zone, said washing zone at the opposite side connecting to the receiving zone.

21. A method for washing potatoes and like bulbous and tuberous plants, in particular suitable for use with an apparatus according to the invention, wherein the potatoes are flushed in a whirling mass of water in a flushing zone, whereupon the flushed potatoes are discharged from the flushing zone in the direction of a receiving zone, characterized in that the flushing water and the potatoes are passed to a washing zone wherein the potatoes are washed, at least a part of the solid particles being enabled to settle, the density of solid particles being measured, and means being controlled, on the basis of the density measured, for extracting the settled solid particles, whereupon the washing water and the potatoes are passed to a receiving zone from which the potatoes are discharged outside the apparatus, substantially the remaining part of the solid particles being enabled to settle, the density of solid particles being measured, and means being controlled, on the basis of the density measured, for extracting the settled solid particles, the received water being fed back to the flushing zone.

22. A method according to claim 21, in particular suitable for use with the washing apparatus according to claim 19 or 20, characterized in that by means of the lifter (23), bulbs or tubers are taken out of or from a field and are then washed, solid particles being separated, said solid particles being thrown back on the field periodically or continuously, and the washed bulbs or tubers being collected.
